# EUROPÄISCHE PATENTSCHRIFT

(11) **EP 3 838 681 B1**
(45) Veröffentlichungstag und Bekanntmachung des Hinweises auf die Patenterteilung: **20.08.2025**
(21) Anmeldenummer: 20214024.0
(22) Anmeldetag: 15.12.2020
(51) Int. Cl.: B60R 11/04, G01S 13/92, G01S 17/58, G01S 17/86, G01S 17/89, G08G 1/04, G01S 13/931

(54) **KRAFTFAHRZEUG MIT EINEM FAHRZEUGEINBAU FÜR EIN VERKEHRSÜBERWACHUNGSGERÄT**
MOTOR VEHICLE WITH A VEHICLE INSTALLATION FOR A TRAFFIC MONITORING DEVICE
VÉHICULE AUTOMOBILE AVEC UNE INSTALLATION POUR UN DISPOSITIF DE SURVEILLANCE DE LA CIRCULATION

(30) Priorität: 18.12.2019 DE 102019134900
(43) Veröffentlichungstag der Anmeldung: 23.06.2021
(73) Patentinhaber: Jenoptik Robot GmbH, 40789 Monheim (DE)
(72) Erfinder: Loos, Kai, 89077 Ulm (DE); Urbanek, Martin, 83645 Bad Tölz (DE)
(74) Vertreter: Waldauf, Alexander

(56) Entgegenhaltungen:
- WO-A1-2017/177206
- DE-A1- 10 127 635
- US-A1- 2005 017 491
- US-A1- 2007 030 350

## Beschreibung

Die vorliegende Erfindung bezieht sich auf ein Kraftfahrzeug mit einem Fahrzeugeinbau nach Anspruch 1 und einem Verfahren zum Dokumentieren eines Regelverstoßes eines Fahrzeugs nach Anspruch 7.

Verkehrsüberwachungsanlagen oder Verkehrsüberwachungsgeräte können für vielerlei Aufgaben im Straßenverkehr eingesetzt werden, z. B. für die Analyse von Verkehrsströmen, steuern von Verkehrsleitsystemen oder insbesondere für die Erfassung und Verfolgung von Verkehrsverstößen. Bei der Verfolgung von Verkehrsverstößen werden überwiegend Verkehrsüberwachungsanlagen mit fotografischer Erfassung eingesetzt, da eine anschließende Verfolgung des Verkehrsverstoßes, gegebenenfalls bis vor Gericht, wesentlich leichter durchführbar ist. Verkehrsüberwachungsanlagen mit fotografischer Erfassung werden für die Erfassung verschiedener Verkehrsverstöße, wie z. B. Übertretung der zulässigen Höchstgeschwindigkeit, Missachten der Rotlichtphase an Lichtzeichenanlagen, Unterschreitung des Mindestabstandes usw., eingesetzt. Da die dabei eingesetzten Kameras zur Erfassung von Verkehrsverstößen unabhängig von der Art der Erfassung des Verkehrsverstoßes eingesetzt werden können, wird im Folgenden die Erfassung von Geschwindigkeitsverstößen beschrieben, da sie die häufigste Art von Verkehrsverstößen darstellen. Grundsätzlich erfolgt die fotografische Erfassung von Verkehrsverstößen in gleicher oder ähnlicher Weise, jeweils getriggert von dem Eintritt des Ereignisses eines Verkehrsverstoßes.

Es wird hauptsächlich zwischen stationären und mobilen Verkehrsüberwachungsgeräten unterschieden. Dabei ist ein solches Verkehrsüberwachungsgerät meist modular aufgebaut und beinhaltet meist eine geschwindigkeitsmessende Sensoreinheit (Radar, Laser, LIDAR oder vergleichbare Sensoren), eine Kamera zur Dokumentation der Verkehrsverstöße, eine Beleuchtungseinheit (Blitz) und eine Rechnereinheit. Bei dem Einsatz eines Mess- bzw. Radarsensors kann es sich insbesondere auch um optische Sensoren wie Laser- bzw. Lichtsensoren unterschiedlichster Frequenzen und Bandbreiten handeln, welche aus Gründen der Übersicht und Lesbarkeit abschließend nicht aufgezählt werden sollen. Zur Stromversorgung werden häufig Akkus verwendet. Stationäre Anlagen werden fest an einem Messplatz verbaut, wobei mobile Anlagen an unterschiedlichen Einsatzorten und Messplätzen betrieben werden. Häufig werden mobile Verkehrsüberwachungsgeräte in Messfahrzeugen der Kommunen und der Polizei verbaut. Dieses Verbauen erfolgt als Integration ins Fahrzeug mittels Fahrzeugeinbau. Der Fahrzeugeinbau ist befähigt ein Verkehrsüberwachungsgerät in Position zu bringen.

Ein Gattungsgemäßer Fahrzeugeinbau wird in der DE 29700373 U1 beschrieben. Hier wird ein Kugelrollenvollauszug beschrieben. Dieser dient jedoch einem Schubladensystem zur Aufbewahrung von Komponenten einer Verkehrsüberwachungsanlage. Eine Positionierung für den Messbetrieb wird nicht beschrieben.

Die DE 93 18 170 U1 offenbart eine Vorrichtung zur Halterung einer Kamera oberhalb des Dachniveaus eines Fahrzeuges, wobei die Kamera am einen Ende eines starren Trägers gehalten ist, der an seinem anderen Ende an einem im Fahrzeug festgelegten Gestell verschwenkbar gehalten ist, wobei die Kamera aus einer im Fahrzeug hinter einer Tür sicher verstauten Stellung bei geöffneter Tür in ihre Arbeitsstellung und zurück bewegbar ist.

Die US 2005/0017491 A1 und die US 2007/0030350 A1 offenbaren Inspektionsvorrichtungen, die außerhalb der Fahrgastzelle an der Karrosserie an einem Fahrzeug angebaut sind.

Nachteilig an diesen oder aus dem Stand der Technik bekannten anderen Fahrzeugeinbauten ist zusätzlich, dass die Aufnahme für die Verkehrsüberwachungsgeräte meistens auf der Beifahrerseite oder hinten im Kofferraum bzw. der Ladefläche eines handelsüblichen PKW bzw. Kastenwagens (Messfahrzeugs) verbaut werden. Durch diese Messanordnung werden Winkelverhältnisse zwischen zu messender Fahrbahn und Sensoren (z.B. Kamerasensor und Lasersensor) geschaffen, welche einen großen Freiraum vor bzw. hinter dem Messfahrzeug erfordern. Ansonsten kommt es zu Abschattungen und Sichtversperrungen. Bei Vorrichtungsanordnungen außerhalb der Fahrgastzelle z. B. oberhalb des Dachniveaus sind besondere Anforderungen hinsichtlich der Gehäuse in Bezug auf Wasserdichtheit zu berücksichtigen. Ein unauffälliger Messbetrieb ist nur bedingt möglich, da Dachaufbauten eher auffallen als Vorrichtungsanordnungen, welche innerhalb der Fahrgastzelle betrieben werden. Sehr häufig erfolgt eine Messung aus dem Frontbereich des Messfahrzeugs. Hier müssen Messplätze (Parkplätze) angefahren werden, welche mindestens eine halbe bis ganze Fahrzeuglänge Freiraum vor dem Messfahrzeug gewährleisten. Dieses ist gerade in Innenstädten heute nicht mehr oder nur sehr schwer realisierbar. Findet man dennoch einen solchen Messplatz, so können insbesondere kleinere Fahrzeuge und Zweiräder diesen verbleibenden Freiraum als Parklücken nutzen und dann die Messungen (bewusst oder unbewusst) behindern.

Vor diesem Hintergrund schafft die vorliegende Erfindung einen verbesserten Fahrzeugeinbau für ein Verkehrsüberwachungsgerät, ein verbessertes Kraftfahrzeug mit einem Fahrzeugeinbau und ein Verfahren zum Dokumentieren eines Regelverstoßes eines Fahrzeugs gemäß den Hauptansprüchen. Vorteilhafte Ausgestaltungen ergeben sich aus den Unteransprüchen und den nachfolgenden Beschreibungen.

Der Fahrzeugeinbau für ein Verkehrsüberwachungsgerät weist eine Verstelleinheit auf, welche das Verkehrsüberwachungsgerät bzw. dessen Komponenten von einer Ruheposition in eine Messposition positioniert.

Hierzu kann das Verkehrsüberwachungsgerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Verkehrsüberwachungsgerät kann vorliegend ein elektrisches Gerät verstanden werden, das Sensorsignale verarbeitet und in Abhängigkeit davon Steuer- und/oder Datensignale ausgibt. Das Gerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer besonders bevorzugten Ausführungsform erfolgt das Positionieren der Verstelleinheit durch ein horizontales Verschieben. Dieses hat den Vorteil, dass ein sehr schnelles und einfaches Umrüsten aus der Ruheposition beim Transport des Verkehrsüberwachungsgeräts in den Messbetrieb bzw. die Messposition erfolgen kann. Besonders bevorzugt kann eine Arretierung der Verstelleinheit mittels einer Arretierraste erfolgen, so dass eine exakte Ausrichtbarkeit gewährleistet wird. Die Messung erfolgt durch diese Arretierung exakt immer von derselben Messposition aus.

Besonders bevorzugt kann die Verstelleinheit auf mindestens einer Schiene geführt werden. Diese kann mittels Wälzkörpern gelagert werden. Hierdurch wird eine steife und geradlinige Verstellung gewährleistet. Die Schiene kann insbesondere so geführt sein, dass die Komponenten des Verkehrsüberwachungsgerätes am Lenkrad vorbei verschoben bzw. positioniert werden können. Somit kann das Verkehrsüberwachungsgerät in einfacher Weise sehr nah in Richtung Fahrbahnrand verschoben werden.

Besonders bevorzugt ist ein Fahrzeugeinbau mit einer Verstelleinheit, welche in Form einer Messtischauflage (Platte) klappbar ist. Die Messtischauflage hat eine Ober- und eine Unterseite. Die Montage der Komponenten des Verkehrsüberwachungsgeräts sind hierbei mit der Oberseite der Platte verschiebbar oder ortsfest befestigt. In der Ruheposition ist die Platte mit der Unterseite nach oben als Deckel zum Basiselement, welches sich bevorzugt im Bereich des Beifahrersitzes befindet, ausgebildet und zusammengeklappt, so dass die Komponenten des Verkehrsüberwachungsgeräts über Kopf in dem Basiselement gelagert werden. Zur Ausbildung der Messposition wird die Platte in Richtung des Lenkrads aufgeklappt, so dass die Messtischoberseite nach oben ausgerichtet wird.

Eine weitere bevorzugte Ausführungsform ist ein Fahrzeugeinbau bzw. ein Kraftfahrzeug mit einem Fahrzeugeinbau, welcher eine Verstelleinheit beinhaltet, die mindestens an einem Punkt drehbar angeordnet ist. Die Verstelleinheit kann mit dem Basiselement oder einem beliebigen Element des Fahrzeugeinbaus oder des Fahrzeugs fixiert sein. Eine geeignete Ruheposition stellt hier der Bereich der Rückbank oder des Kofferraums dar. Zur Ausbildung der Messposition wird das Verkehrsüberwachungsgerät beispielsweise in Richtung des Lenkrads gedreht.

Gemäß einer weiteren Ausführungsform kann die Verstelleinheit durch Kombination aus Klappen und Drehen von der Ruheposition in die Messposition gebracht werden.

Gemäß einer bevorzugten Ausführungsform kann die Verstelleinheit durch Kombination aus Klappen, Drehen und Verschieben von der Ruheposition in die Messposition gebracht werden.

Eine weitere bevorzugte Ausführungsform fixiert die Verstelleinheit mit einem Basiselement, welches schrankähnlich zur Bevorratung und/oder zum sicheren Transport von Komponenten des Verkehrsüberwachungsgeräts ausgeführt ist. Das Basiselement kann zusätzlich mit Schubladen und/oder Fächern ausgerüstet sein. Das Basiselement kann in besonders geeigneter Ausführungsform auch als Unterteil für eine klappbare Anordnung der Verstelleinheit dienen, so dass eine Demontage der Komponenten des Verkehrsüberwachungsgeräts entfällt und diese über Kopf in der Basisstation sicher für den Transport gelagert werden können.

Die Komponenten des Verkehrsüberwachungsgeräts umfassen besonders bevorzugt zumindest eine Sensoreinheit und/oder einer Beleuchtungseinheit. In kompakter Bauweise kann auch ein komplettes Verkehrsüberwachungsgerät inkl. Rechnereinheit und Stromversorgung auf der Verstelleinheit angeordnet sein.

In einer weiteren bevorzugten Ausführungsform kann das Verkehrsüberwachungsgerät mit T-Nutensteinen auf einer Schiene montiert sein, sodass dieses auf dieser Schiene vorzugsweise stufenlos verschoben werden kann. Die Schiene ist derart angebracht, dass sie für den Fahrbetrieb wieder vom Fahrersitz bzw. der Position des Fahrersitzes weggeschoben bzw. weggeklappt werden kann, um ein störungsfreies Fahren zu gewährleisten. Dieses insbesondere im Zusammenhang mit einem Schaltgetriebe, so dass ein ungestörtes Schalten mittels Schalthebel gewährleistet werden kann.

Bei allen genannten Beispielen und Ausführungsformen können geeignete Stützmechanismen und Schraubfixierungen eine steife und stabile Anordnung der Verstelleinheit gewährleisten.

Die Erfindung betrifft ein Kraftfahrzeug mit einem Fahrzeugeinbau nach Anspruch 1.

Zusätzlich zum Fahrzeugeinbau und zum Kraftfahrzeug mit einem Fahrzeugeinbau wird ein Verfahren mit einer Verstelleinheit für ein Verkehrsüberwachungsgerät beansprucht, welches eine Positionierung der Verstelleinheit in Ruheposition und in einer davon verschiedenen Messposition positioniert und einen Regelverstoß eines Fahrzeugs dokumentiert.

Die Erfindung wird anhand der beigefügten Zeichnungen beispielhaft näher erläutert. Es zeigen:
Figur 1 eine schematische Darstellung der Messplatzanordnung im Straßenverkehr gemäß einem Ausführungsbeispiel;
Figur 2a eine schematische Darstellung eines Kraftfahrzeugs mit einem Fahrzeugeinbau gemäß einem Ausführungsbeispiel (Seitenansicht);
Figur 2b eine schematische Darstellung eines Kraftfahrzeugs mit einem Fahrzeugeinbau gemäß einem Ausführungsbeispiel (Draufsicht, Kraftfahrzeug geschnitten);
Figur 3 eine schematische Darstellung einer horizontalen Verstelleinheit für das Verkehrsüberwachungsgerät;
Figur 4 eine schematische Darstellung einer klappbaren Verstelleinheit für das Verkehrsüberwachungsgerät; und
Figur 5 ein Ablaufdiagramm eines Verfahrens zum Dokumentieren eines Regelverstoßes eines Fahrzeugs.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

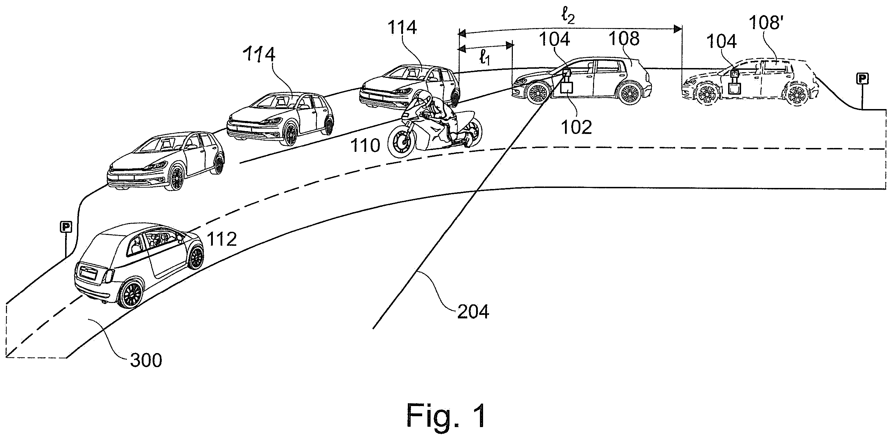

Figur 1 zeigt eine schematische Darstellung der Messplatzanordnung im Straßenverkehr gemäß einem Ausführungsbeispiel. Hierbei soll z.B. die Geschwindigkeit der Fahrzeuge 110 und 112 auf einer Fahrbahn 300 messtechnisch erfasst und dokumentiert werden. Es sind zwei Messszenarien dargestellt mit einem Messfahrzeug, d.h. Kraftfahrzeug 108 und 108'. Beide Messfahrzeuge sind mit einem Fahrzeugeinbau 102 für ein Verkehrsüberwachungsgerät 104 ausgestattet. Das Messfahrzeug 108 ist mit der Verstelleinheit 106 ausgestattet und das Messfahrzeug 108' ist ohne diese ausgeführt. Um einen vergleichbar großen Erfassungsbereich 204 ohne Abschattungen und Sichtbehinderungen des vorausparkenden Fahrzeugs 114 zu erhalten, muss das Verkehrsüberwachungsgerät so weit wie möglich zur Fahrbahn 300 positioniert werden. Während des Fahrens ist dieser Platz durch den Fahrer belegt. Daraus resultierend kann das Messfahrzeug 108 mit einem sehr geringen Abstand I1 abgestellt werden, wobei ohne die Verschiebeeinheit ein sehr viel größerer Abstand I2 des Messfahrzeugs 108' erforderlich ist. Die Strecke I2 direkt vor dem Messfahrzeug kann durch weitere Fahrzeuge, die parken wollen und weitere Verkehrsteilnehmer eingenommen werden und den Messbetrieb unterbrechen oder unmöglich machen. Die Strecke I1 entspricht eher der Parkraumsituation von Großstädten mit nur wenig Parkflächen. Die Messung kann sowohl für den abfließenden Verkehr, hier für Fahrzeug 110 (Motorrad), als auch für den ankommenden Verkehr, hier für Fahrzeug 112 (PKW) erfolgen. Es wird beispielhaft eine Verkehrssituation mit Rechtsverkehr dargestellt. Die Erfindung kann analog auch für Länder mit Linksverkehr eingesetzt werden.

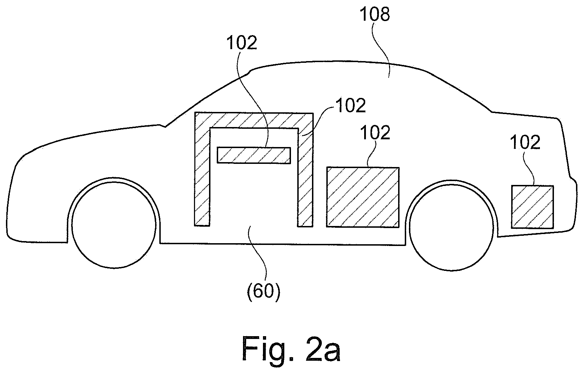

Figur 2a zeigt eine schematische Darstellung eines Kraftfahrzeugs 108 (Messfahrzeugs) mit einem Fahrzeugeinbau 102 gemäß einem Ausführungsbeispiel als Seitenansicht von der Seite 60 aus.

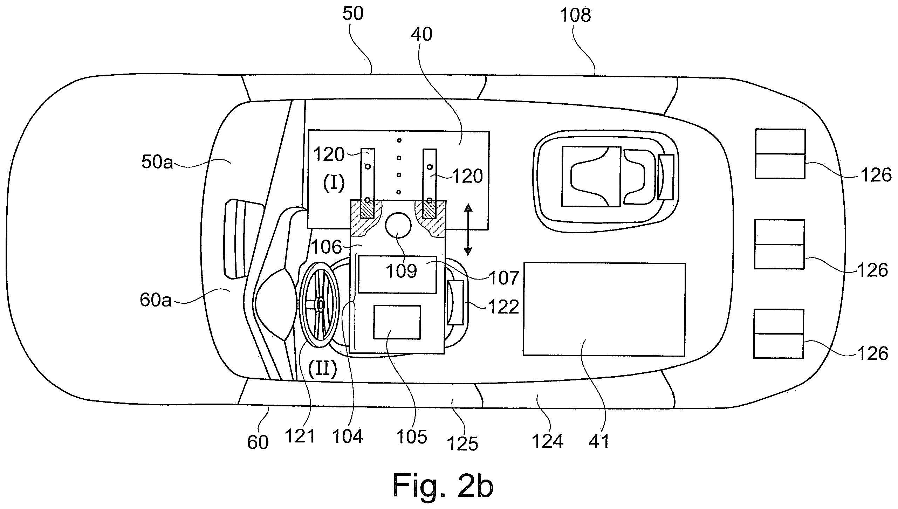

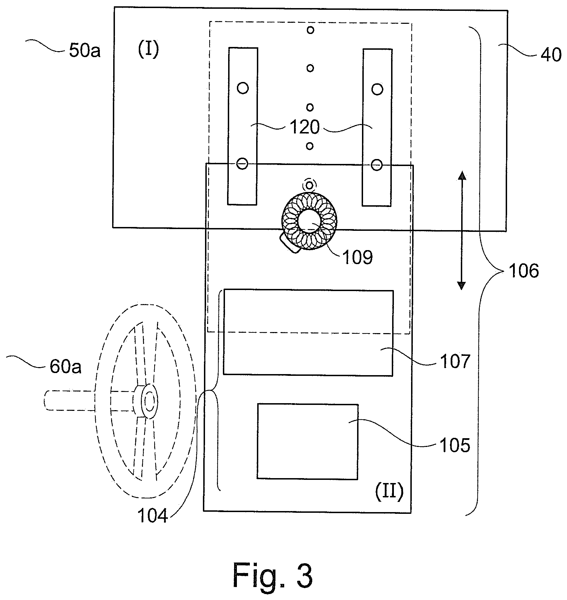

Figur 2b zeigt eine schematische Darstellung eines Kraftfahrzeugs 108 mit einem Fahrzeugeinbau 102 gemäß dem Ausführungsbeispiel aus Fig. 2a in einer Draufsicht (Kraftfahrzeugdach abgeschnitten). Der besonders bevorzugte Einbaubereich des Fahrzeugeinbaus 106 ist der vordere Bereich 125. Das Kraftfahrzeug umfasst in diesem vorderen Bereich einen Fahrerbereich 60a auf einer zweiten Seite 60 des Kraftfahrzeuges mit einem Lenkrad 121 und einem Fahrersitz 122 und einen Beifahrerbereich 50a auf einer ersten Seite 50 des Kraftfahrzeuges. In diesem Bereich 50a (hier befindet sich auch die Ruheposition (I) des Verkehrsüberwachungsgerätes) wird der Fahrzeugeinbau 102 mit dem Boden des Fahrzeugs oder mit dem Beifahrersitz (hier nicht dargestellt) befestigt. Die Befestigung erfolgt mittels eines Basiselementes 40. Auf einer Oberseite des Basiselementes 40 sind Schienen 120 angeordnet. Das Basiselement 40 dient neben der Aufnahme der Schienen ferner zur sicheren Aufbewahrung von Komponenten des Verkehrsüberwachungsgeräts 104. Es können sowohl Ersatzteile als auch Komponenten der Sensoreinheit 105 und der Beleuchtungseinheit 107 des Verkehrsüberwachungsgerätes aufgenommen und sicher verstaut werden (z.B. wenn das Kraftfahrzeug von einem Messort zu einem anderen Messort bewegt wird). Hierzu sind diese Einheiten von der Verstelleinheit 106 demontierbar ausgeführt. Die Verstelleinheit 106 ist mit dem Basiselement 40 über Schienen 120 verbunden. Somit ist eine vorzugsweise stufenlose Verstellung des Verkehrsüberwachungsgerätes von der Ruheposition (I) in die Messposition (II) möglich. Eine Arretierung mittels Arretierraste 109 ermöglicht ein Feststellen der Verstelleinheit 106. Die Verstelleinheit 106 ist hier in Form eines horizontal verschiebbaren Messtisches dargestellt, welcher die Sensoreinheit 105 (hier Kamera und Lasersensor) und die Beleuchtungseinheit 107 (hier LED-Blitz) in die Messposition (II) im Bereich 60a positioniert. Der Fahrzeugeinbau 102 kann aus einem oder mehreren kastenförmige Elementen bestehen. Im Bereich 124 der Rücksitzbank ist ein weiteres Element 41 dargestellt, welches z.B. eine Klimaanlage oder eine Rechnereinheit beinhaltet. Dieses weitere Element 41 kann in besonders bevorzugter Ausführung auch eine Verstelleinheit 106 umfassen, welches vom hinteren Bereich 124 in den vorderen Bereich 125 eingedreht bzw. positioniert werden kann. Die Ladefläche ist zusätzlich zur Aufnahme eines Verkehrsüberwachungsgeräts 104 für den Heckbetrieb mittels T-Nutensteinen bzw. T-Nutenschienen 126 ausgestattet. Figur 3 zeigt eine schematische Darstellung einer horizontalen Verstelleinheit 106 für die Komponenten des Verkehrsüberwachungsgeräts 104, hier die Sensoreinheit 105 (Kamera mit Lasersensor) und die Beleuchtungseinheit 107 (LED-Blitz). Dargestellt ist die Verstelleinheit 106 in der Messposition (II) mit Arretierung 109 und (gestrichelt) die Verstelleinheit 106 in der Ruheposition (I). Die Befestigung erfolgt wie in Figur 2b dargestellt auf dem Basiselement 40 über eine vorzugsweise mittels Kugelrollenlagern geführte Schienenanordnung 120.

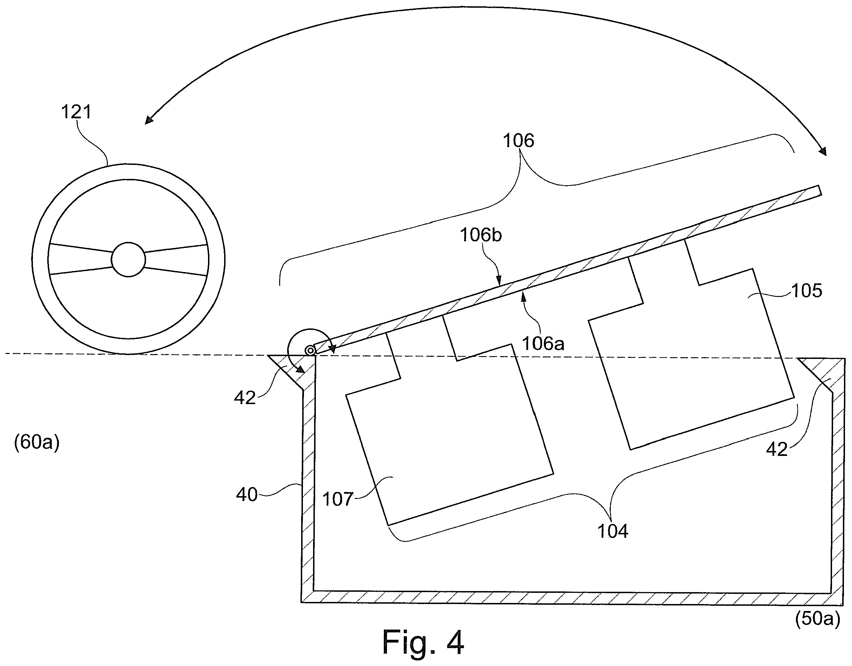

Figur 4 zeigt eine schematische Darstellung einer klappbaren Verstelleinheit 106 in Form einer drehbar gelagerten Platte für die Komponenten des Verkehrsüberwachungsgeräts, hier die Sensoreinheit 105 (Kamera mit Lasersensor) und die Beleuchtungseinheit 107 (LED-Blitz). Dargestellt ist die Verstelleinheit 106 in der unmittelbaren Nähe der Ruheposition (I), hier beim Zuklappen auf das Basiselement 40 in Richtung einer Stütze 42. Die drehbar gelagerte Verstelleinheit 106 (Platte) hat eine Oberseite 106a und eine Unterseite 106b. Die Montage der Komponenten des Verkehrsüberwachungsgeräts 104 (Sensoreinheit 105 - hier Kamera und Lasersensor - und die Beleuchtungseinheit 107 -hier LED-Blitz) sind hierbei mit der Oberseite 106a der Platte ortsfest befestigt. In der Ruheposition (I) ist die Platte mit der Unterseite 106b nach oben als Deckel zum Basiselement 40, welches sich bevorzugt im Bereich des Beifahrersitzes 50a befindet, ausgebildet und zusammengeklappt, so dass die Komponenten 105 und 107 des Verkehrsüberwachungsgeräts 104 über Kopf in dem Basiselement 40 gelagert werden. Zur Ausbildung der Messposition (II) wird die Platte in Richtung des Lenkrads 121 in den Bereich 60a aufgeklappt, so dass die Plattenoberseite 106a nach oben ausgerichtet wird. Die Komponenten 105 und 107 bleiben beim Zuklappen der Anordnung in die Ruheposition (I) vorzugsweise weiterhin mit den anderen Komponenten sowie Rechnereinheit und Stromversorgung des Verkehrsüberwachungsgeräts 104 verbunden, so dass die Messungen direkt nach Aufklappen der Anordnung erfolgen können, ohne dass eine aufwendige Verkabelung und ein Aufbau der Komponenten 105 und 107 erfolgen muss. Geeignete Stützmechanismen 42 und Schraubfixierungen gewährleisten eine steife und stabile Anordnung der Verstelleinheit 106.

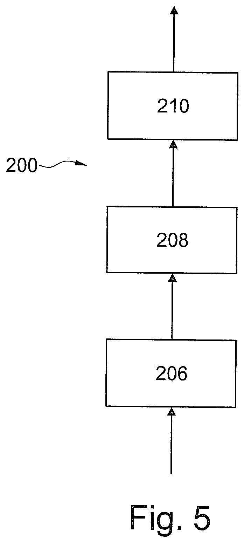

Figur 5 zeigt beispielhaft ein Flussdiagramm zur Ausführung des beanspruchten Verfahrens 200 mit den Schritten
a) des Bereitstellens 206 eines Kraftfahrzeuges 108 mit einem Fahrzeugeinbau 102,
b) des Positionierens 208 des Verkehrsüberwachungsgerätes 104 mittels der Verstelleinheit 106 von der Ruheposition (I) in die Messposition (II) und
c) des Dokumentierens eines Regelverstoßes 210 eines Fahrzeugs 110, 112 in einem Erfassungsbereich 204.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Kraftfahrzeug (108) mit einem Fahrzeugeinbau (102), welcher mit dem Boden des Kraftfahrzeugs (108) oder mit dem Beifahrersitz befestigt ist, mit einem Verkehrsüberwachungsgerät (104), wobei der Fahrzeugeinbau eine Verstelleinheit (106) aufweist, um das Verkehrsüberwachungsgerät von einer ersten Ruheposition (I) zu einer davon verschiedenen zweiten Messposition (II) zu positionieren, wobei das Kraftfahrzeug eine erste Seite (50) und eine zweite Seite (60) aufweist und die Verstelleinheit das Verkehrsüberwachungsgerät von der Ruheposition (I) auf der ersten Seite (50) zu der davon verschiedenen zweiten Messposition (II) in Richtung der zweiten Seite (60) positioniert, wobei auf der ersten Seite (50) ein Beifahrerbereich (50a) und auf der zweiten Seite (60) ein Fahrerbereich (60a) angeordnet ist.

2. Kraftfahrzeug (108) gemäß Anspruch 1, wobei das Positionieren der Verstelleinheit (106) durch ein horizontales Verschieben erfolgt.

3. Kraftfahrzeug (108) gemäß Anspruch 1 oder 2, wobei die Verstelleinheit (106) auf mindestens einer Schiene (120) geführt wird.

4. Kraftfahrzeug (108) gemäß einem der vorhergehenden Ansprüche, wobei die Verstelleinheit (106) im Wesentlichen klappbar und/ oder verdrehbar ist.

5. Kraftfahrzeug (108) gemäß einem der vorhergehenden Ansprüche, wobei der Fahrzeugeinbau ein Basiselement (40) zur Fixierung in einem Kraftfahrzeug aufweist.

6. Kraftfahrzeug (108) gemäß einem der vorhergehenden Ansprüche, wobei das Verkehrsüberwachungsgerät zumindest eine Sensoreinheit (105) und/oder eine Beleuchtungseinheit (107) aufweist.

7. Verfahren (200) zum Dokumentieren eines Regelverstoßes (210) eines Fahrzeugs (110, 112) in einem Erfassungsbereich (204), wobei das Verfahren folgende Merkmale aufweist:
Bereitstellen (206) eines Kraftfahrzeuges (108) mit einem Fahrzeugeinbau (102) gemäß Anspruch 6,
Positionieren (208) des Verkehrsüberwachungsgerätes (104) mittels der Verstelleinheit (106) von der Ruheposition (I) in die Messposition (II), um einen Regelverstoß eines Fahrzeugs (110, 112) in einem Erfassungsbereich (204) zu dokumentieren.

## Claims

1. Motor vehicle (108) having a vehicle installation (102), which is fastened to the floor of the motor vehicle (108) or to the passenger seat, having a traffic monitoring device (104), wherein the vehicle installation has an adjustment unit (106) in order to position the traffic monitoring device from a first position of rest (I) to a second measurement position (II) that differs from the latter, wherein the motor vehicle has a first side (50) and a second side (60), and the adjustment unit positions the traffic monitoring device from the position of rest (I) on the first side (50) to the second measurement position (II) that differs from the latter in the direction of the second side (60), wherein a passenger area (50a) is arranged on the first side (50) and a driver area (60a) is arranged on the second side (60).

2. Motor vehicle (108) according to Claim 1, wherein the positioning by the adjustment unit (106) is effected by means of horizontal displacement.

3. Motor vehicle (108) according to Claim 1 or 2, wherein the adjustment unit (106) is guided on at least one rail (120).

4. Motor vehicle (108) according to one of the preceding claims, wherein the adjustment unit (106) is substantially foldable and/or rotatable.

5. Motor vehicle (108) according to one of the preceding claims, wherein the vehicle installation has a base element (40) for fixing in a motor vehicle.

6. Motor vehicle (108) according to one of the preceding claims, wherein the traffic monitoring device has at least one sensor unit (105) and/or a lighting unit (107).

7. Method (200) for documenting a rule violation (210) of a vehicle (110, 112) in a detection area (204), wherein the method has the following features:
providing (206) a motor vehicle (108) having a vehicle installation (102) according to Claim 6,
positioning (208) the traffic monitoring device (104) from the position of rest (I) into the measurement position (II) by means of the adjustment unit (106) in order to document a rule violation of a vehicle (110, 112) in a detection area (204).

## Revendications

1. Véhicule automobile (108) comprenant un équipement embarqué (102) qui est fixé au plancher du véhicule automobile (108) ou au siège passager, ayant un appareil (104) de surveillance du trafic, l'équipement embarqué comprenant une unité de réglage (106) pour positionner l'appareil de surveillance du trafic d'une première position de repos (I) à une deuxième position de mesure (II) différente de celle-ci, le véhicule automobile présentant un premier côté (50) et un deuxième côté (60) et l'unité de réglage positionnant l'appareil de surveillance du trafic de la position de repos (I) sur le premier côté (50) à la deuxième position de mesure (II) différente de celle-ci en direction du deuxième côté (60), une zone passager (50a) étant agencée sur le premier côté (50) et une zone conducteur (60a) étant agencée sur le deuxième côté (60).

2. Véhicule automobile (108) selon la revendication 1, dans lequel le positionnement de l'unité de réglage (106) s'effectue par un déplacement horizontal.

3. Véhicule automobile (108) selon la revendication 1 ou 2, dans lequel l'unité de réglage (106) est guidée sur au moins un rail (120).

4. Véhicule automobile (108) selon l'une des revendications précédentes, dans lequel l'unité de réglage (106) est essentiellement rabattable et/ou pivotante.

5. Véhicule automobile (108) selon l'une des revendications précédentes, dans lequel l'équipement embarqué comprend un élément de base (40) destiné à être fixé dans un véhicule automobile.

6. Véhicule automobile (108) selon l'une des revendications précédentes, dans lequel l'appareil de surveillance de trafic comprend au moins une unité (105) formant capteur et/ou une unité d'éclairage (107).

7. Procédé (200) pour documenter une infraction à une règle (210) commise par un véhicule (110, 112) dans une zone de détection (204), le procédé présentant les caractéristiques suivantes :
mise à disposition (206) d'un véhicule automobile (108) comprenant un équipement embarqué (102) selon la revendication 6,
positionnement (208) de l'appareil (104) de surveillance de trafic au moyen de l'unité de réglage (106) de la position de repos (I) à la position de mesure (II) afin de documenter une infraction à une règle commise par un véhicule (110, 112) dans une zone de détection (204).
